# EUROPEAN PATENT SPECIFICATION

(11) **EP 2 607 682 B1**
(45) Date of publication and mention of the grant of the patent: **16.08.2017**
(21) Application number: 11195054.9
(22) Date of filing: 21.12.2011
(51) Int. Cl.: F03B 13/26, F03B 15/00, F03B 17/06, F03B 13/10

(54) **A hydroelectric turbine system**
Hydroelektrisches Turbinensystem
Système de turbine hydroélectrique

(43) Date of publication of application: 26.06.2013
(73) Proprietor: Openhydro IP Limited, Dublin 2 (IE)
(72) Inventor: Dunne, Paul, Dublin, 9 (IE); Ives, James, Dublin, 2 (IE); Cawthorne, Simon, Carlingford, County Louth (IE)
(74) Representative: O'Neill, Brian

(56) References cited:
- EP-A1- 2 199 601
- WO-A2-2008/101805
- WO-A2-2009/038562
- GB-A- 2 006 998
- JP-A- 1 206 900

## Description

### Field of the invention

This invention relates to a hydroelectric turbine system, and in particular a hydroelectric turbine system, which facilitates a more flexible approach to the deployment, retrieval, and/or maintenance of a hydroelectric turbine system.

### Background of the invention

Hydroelectric turbines are known for installation on the seabed in order to generate electrical power from the tidal flow of water through the turbine, thus effectively enabling the continuous and predictable generation of electricity (see for example document EP 2 199 601 A1). However, there are a number of issues surrounding the installation and maintenance, and in some instances the operation, of such hydroelectric turbine.

The main cause of such issues arises from the unavoidable fact that these turbines, in order to be effective and efficient, must be deployed at sites of high tidal flow for the day to day operation of the turbines, but these sites present significant difficulties during the installation, maintenance and retrieval of the turbine. Taking for example the deployment process, the installation sequence of a seabed mounted hydroelectric turbine is time consuming and weather dependent, and involves the steps of getting the turbine to the deployment site and lowering onto the seabed, installing suitable sub sea cabling to the deployment site in order, in use, to transmit the electrical energy onshore or to any other suitable location, and connecting the turbine and cable to one another. It should of course be appreciated that these steps may happen in any order, depending on the particular installation. It will then be appreciated that there will normally be a period of time during which the turbine remains electrically disconnected from the sub sea cabling, following the location of the turbine onto the seabed at the deployment site. However during this period the tide is still running, and therefore flowing through the turbine such as to apply a driving force to the rotor thereof.

In addition to the installation phase, there will be periods during the operating life of the turbine when the connection to the grid has been lost due to grid faults or maintenance work being carried out at the receiving station on shore.

The turbine could be left to spin freely, which is good from an electrical perspective as the turbine generator is open circuit, but this approach might be detrimental mechanically to the turbine as it is running at high speed and thus wearing the bearings and possibly other components of the turbine.

In addition it causes the generator (if excited by permanent magnets as is the common arrangement) to generate an abnormally high voltage. Alternatively it is possible to apply a mechanical lock to the rotor, which then has no effect on the electrical generator components of the turbine, but requires additional mechanical equipment, which may have a negative impact on the reliability and cost of the turbine. As a further alternative, it is possible to electrically lock the rotor in position, although this has a negative impact electrically as the generator is then short-circuited. This approach is good mechanically as the bearings are not been run/worn while the turbine is electrically locked.

It is therefore an object of the present invention to overcome the above-mentioned problems.

### Summary of the invention

According to the present invention there is provided a hydroelectric turbine system operational method as defined in claim 1. Preferably, the method comprises the steps of;
providing the load bank as a resistive load bank and/or an inductive load bank

Preferably, the method comprises the steps of:
providing the load bank as one or more heating elements;
passing the electrical power through the heating elements in order to generate heat; and dissipating the heat to the water flowing past the turbine system.

Preferably, the method comprises the steps of:
connecting an electrical output of the turbine to an electrical grid; and
electrically disconnecting the load bank from the turbine.

Preferably, the method comprises the step of:
monitoring one or more operating parameters of the turbine system while the load bank is electrically connected to the turbine.

Preferably, the method comprises electrically connecting the cabling to the turbine and operating the turbine; electrically disconnecting the cabling from the turbine to allow for maintenance/removal of the turbine; and prior to the maintenance/removal of the turbine absorbing the electrical power generated by the turbine into the load bank.

Preferably, the method comprises, in the step of deploying the turbine, suspending the turbine beneath a vessel;
using the vessel to tow the turbine through the water such as to effect rotation of the turbine to generate electrical power; and
absorbing the electrical power into the load bank.

Preferably, the method comprises the step of absorbing excess electrical power, generated during normal operation of the turbine, into the load bank.

Preferably, the method comprises the step of switching the electrical load generated by the turbine from the load bank to the electrical cabling once the electrical cabling is electrically connected to the turbine.

As used herein, the term "absorbing" is intending to mean either the direct transfer of electrical power from a generator to a resistive load in order to heat the resistive load, and/or the drawing of a reactive power into an inductive load in order to reduce the voltage imposed on the generator.

### Brief description of the drawings

Figure 1 illustrates a schematic representation of a hydroelectric turbine system forming part of a turbine system according to an embodiment of the present invention;
Figure 2 illustrates a schematic representation of a pair of heating elements making up a load bank forming part of the turbine system;
Figure 3 illustrates electrical schematic of the turbine system, illustrating load switching capability of the hydroelectric turbine system;
Figure 4 illustrates the hydroelectric turbine system undergoing a pre-deployment tow test;
Figure 5 illustrates a possible position about the system for the load bank; and
Figure 6 illustrates an alternative position about the system for the load bank.

### Detailed description of the drawings

Referring now to the accompanying drawings there is illustrates a hydroelectric turbine system, generally indicated as 10, which is designed to be deployed on the seabed B at a site of high tidal velocity in order to generate electricity from the tidal flow.

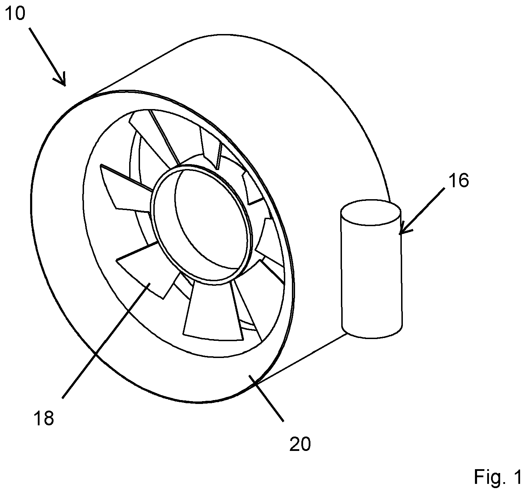

The turbine system 10 comprises a hydroelectric turbine 12 mounted on a base 14 that supports the turbine 12 in the correct orientation above the seabed in order to allow the turbine 12 to generate electricity in known fashion. Referring in particular to Figure 1, it can be seen that the turbine system 10 further comprises a load bank 16 mounted to the system 10, and which in the embodiment illustrated is secured to the circumferential rim of a stator 18 forming part of the turbine 12, and within which stator 18 a rotor 20 is mounted for rotation. The stator 18 is mounted to the base 14 and thus during use remains stationary while the rotor 20 is driven by the tidal flow T of water, in order to generate electricity with the turbine 12.

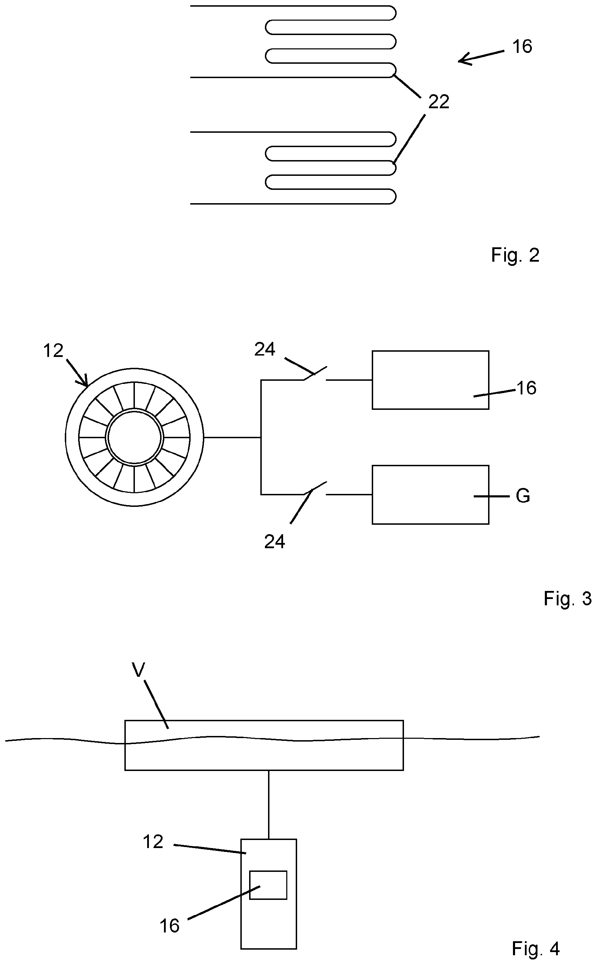

Referring to Figure 2, the load bank 16 comprises one or more windings 22, which as described in more detail below, may be resistive or inductive windings, the windings 22 being electrically connected to the generator output (not shown) of the turbine 12. In this way it is possible to allow the turbine 12 to generate electricity without being connected to the grid or the like, and to pass the electrical current generated to the load bank 16 for dissipation, as will be described in detail hereinafter. This thus provides greater flexibility when, for example, installing or recovering the turbine system 10, as it permits the turbine 12 to operate as normal without requiring a grid connection. Thus the turbine system 10 can be deployed at a suitable site without a grid connection, greatly simplifying the installation procedure. The turbine 12 can then be allowed to operate as normal, generating electricity, which is fed into the windings 22 of the load bank 16, thus heating the windings 22. This heat is then dissipated into the water flowing past and through the load bank 16. It is preferable during the period between positioning the turbine system 10 on the seabed, and grid connection, that the turbine 12 is running onto a load of some sort rather than spinning freely or being mechanically or electrically locked.

Similarly, if the turbine is to be decommissioned or removed for maintenance or the like, the provision of the load bank 16 again provides greater flexibility to the operation. Thus the grid connection can be cut, while allowing the turbine 12 to continue operation and thus electrical generation, which is passed to the load bank 16 to be dissipated as heat to the surrounding water. There is then little or no time constraints between disconnection from the grid and retrieval of the turbine system 10.

Referring to Figure 3, the electrical connections between the turbine 12 and the load bank 16, and between the turbine 12 and grid G are showing schematically. Provided between the turbine 12 and the load bank 16 is a load switch 24, and between the turbine 12 and the grid G is a grid switch 26 which can each be operated to effect the electrical connection or isolation of the turbine 12 to the respective load. Thus for example during the installation procedure, the turbine system 10 is initially located on the seabed without a grid connection, and the load switch 24 is closed in order to provide an electrical connection between the turbine 12 and the load bank 16, in order to allow the electrical energy generated by the turbine 12 to be dissipated through the load bank 16. Once a grid connection to the turbine 12 has been established, the grid switch 26 can then be closed, and the load switch 24 opened. The load bank 16 is then electrically isolated from the turbine 12, and as a result the electrical energy generated by the turbine 12 is then supplied to the grid G. This process can then be reversed if the turbine system 10 is to be disconnected from the grid G, for example prior to being recovered for maintenance or the like.

In addition, during extreme events such as storms and high tides the turbine 12 may experience higher tidal flows than usual, and as a result will generate greater electrical power. If such events are a rarity it may not make economic sense to rate the grid connection cabling and power conversion equipment (not shown) to this higher level, and thus during these rare occurrences the extra power could be dissipated to the load bank 16. In this case it would be necessary for both the load switch 24 and the grid switch 26 to be closed. The switches 24, 26 may be remotely operated and/or the load switch 24 may be automatically closed if the power generated by the turbine 12 exceeds a predetermined upper limit.

The load bank 16, referring to Figure 4, is also beneficial in allowing the turbine 12 to be tested prior to final installation. For example the turbine 12 may be secured beneath a vessel V such that the turbine 12 is fully immersed. The vessel V can then draw the turbine 12 through the water in order to simulate the normal operation of the turbine 12. During this procedure, the turbine 12 is electrically connected to the load bank 16, thus allowing the turbine 12 to generate electricity and dissipate same as heat through the load bank 16. This allows the turbine 12 to effectively operate as normal during the testing procedure, allowing valuable information to be gathered during the test. During such testing the load bank 16, and in particular the windings 22, may be provided as resistive windings in order to demonstrate the power generation capabilities of the turbine 12. However, for other purposes, such as showing that the generator windings (not shown) of the turbine 12 can carry current without over heating, or to validate certain electrical parameters, it may be sufficient to simply allow the turbine 12 to generate reactive power into an inductive load bank 16. This has the advantage that the inductor does not need to be in direct contact with the water. Thus the load bank 16 may be a resistive and/or an inductive load bank.

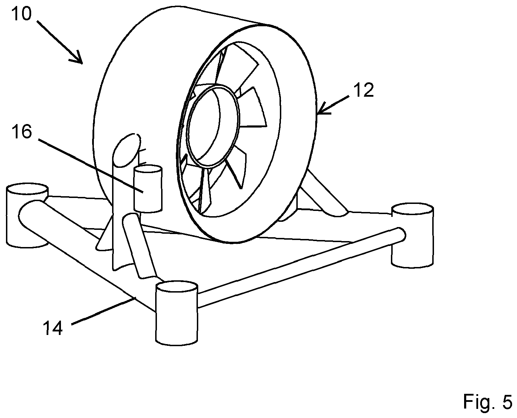

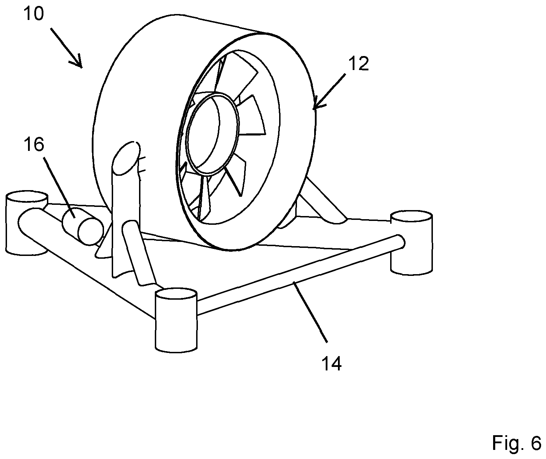

Referring to Figures 5 and 6, it will be appreciated that the load bank 16 may be located at any suitable position about the turbine system 10, and for example may be mounted to the frame work of the base 14 at one or more position. It will also be appreciated that multiple load banks 16 could be employed on a single turbine system 10.

## Claims

1. A hydroelectric turbine system (10) operational method comprising the steps of:
deploying a hydroelectric turbine (12) on a seabed (B) within a tidal body of water;
installing electrical cabling to transfer electrical power from the turbine (12) to a remote location;
permitting the turbine (12) to rotate and generate electrical power in response to the tidal flow of water past the turbine (12); and prior to electrical connection of the cabling to the turbine (12), absorbing the electrical power into a load bank (16) electrically connected to the turbine (12), the load bank (16) being mounted to the hydroelectric turbine system (10).

2. An operational method according to claim 1 comprising the steps of;
providing the load bank (16) as a resistive load bank and/or an inductive load bank.

3. An operational method according to claim 1 or 2 comprising the steps of:
providing the load bank (16) as one or more heating elements;
passing the electrical power through the heating elements in order to generate heat; and
dissipating the heat to the water flowing past the turbine system (10).

4. An operational method according to any preceding claim comprising the steps of:
connecting an electrical output of the turbine (12) to an electrical grid (G); and
electrically disconnecting the load bank (16) from the turbine (12).

5. An operational method according to any of claims 1 to 4 comprising the step of:
monitoring one or more operating parameters of the turbine system (10) while the load bank (16) is electrically connected to the turbine (12).

6. An operational method according to any preceding claim comprising electrically connecting the cabling to the turbine (12) and operating the turbine (12); electrically disconnecting the cabling from the turbine (12) to allow for maintenance/removal of the turbine (12); and prior to the maintenance/removal of the turbine (12) absorbing the electrical power generated by the turbine (12) into the load bank(16).

7. An operational method according to any preceding claim comprising, in the step of deploying the turbine (12), suspending the turbine (12) beneath a vessel (V); using the vessel (V) to tow the turbine (12) through the water such as to effect rotation of the turbine (12) to generate electrical power; and absorbing the electrical power into the load bank(16).

8. An operational method according to any preceding claim comprising the step of absorbing excess electrical power, generated during normal operation of the turbine (12), into the load bank(16).

9. An operational method according to any preceding claim comprising the step of switching the electrical load generated by the turbine (12) from the load bank (16) to the electrical cabling once the electrical cabling is electrically connected to the turbine (12).

## Patentansprüche

1. Betriebsverfahren für ein hydroelektrisches Turbinensystem (10), das folgende Schritte umfasst:
Aufstellen einer hydroelektrischen Turbine (12) auf einem Meeresboden (B) in einem gezeitenbeeinflussten Gewässer;
Installieren von elektrischer Verkabelung, um elektrische Leistung von der Turbine (12) zu einem entfernten Ort zu übertragen;
Zulassen, dass sich die Turbine (12) als Reaktion auf den Gezeitenstrom von Wasser an der Turbine (12) vorbei dreht und elektrische Leistung erzeugt; und
vor dem elektrischen Verbinden der Verkabelung mit der Turbine (12), Absorbieren der elektrischen Leistung in eine elektrisch mit der Turbine (12) verbundene Lastbank (16), wobei die Lastbank (16) an dem hydroelektrischen Turbinensystem (10) angebracht ist.

2. Betriebsverfahren nach Anspruch 1, das folgende Schritte umfasst:
Bereitstellen der Lastbank (16) als Widerstandslastbank und/oder induktive Lastbank.

3. Betriebsverfahren nach Anspruch 1 oder 2, das folgende Schritte umfasst:
Bereitstellen der Lastbank (16) als ein oder mehrere Heizelemente;
Leiten der elektrischen Leistung durch die Heizelemente, um Wärme zu erzeugen; und
Ableiten der Wärme an das an dem Turbinensystem (10) vorbeiströmende Wasser.

4. Betriebsverfahren nach einem der vorangehenden Ansprüche, das folgende Schritte umfasst:
Verbinden eines elektrischen Ausgangs der Turbine (12) mit einem elektrischen Netz (G); und
elektrisches Trennen der Lastbank (16) von der Turbine (12).

5. Betriebsverfahren nach einem der Ansprüche 1 bis 4, das den folgenden Schritt umfasst:
Überwachen von einem oder mehreren Betriebsparametern des Turbinensystems (10), während die Lastbank (16) elektrisch mit der Turbine (12) verbunden ist.

6. Betriebsverfahren nach einem der vorangehenden Ansprüche, umfassend das elektrische Verbinden der Verkabelung mit der Turbine (12) und Betreiben der Turbine (12); elektrisch Trennen der Verkabelung von der Turbine (12), um das Warten/Entfernen der Turbine (12) zu ermöglichen; und vor dem Warten/Entfernen der Turbine (12), Absorbieren der von der Turbine (12) erzeugten elektrischen Leistung in die Lastbank (16).

7. Betriebsverfahren nach einem der vorangehenden Ansprüche, umfassend, im Schritt des Aufstellens der Turbine (12), das Aufhängen der Turbine (12) unter einem Wasserfahrzeug (V), Verwenden des Wasserfahrzeugs (V), um die Turbine (12) durch das Wasser zu schleppen, um die Drehung der Turbine (12) zu bewirken, um elektrische Leistung zu erzeugen; und Absorbieren der elektrischen Leistung in die Lastbank (16).

8. Betriebsverfahren nach einem der vorangehenden Ansprüche, umfassend den Schritt des Absorbierens von während des normalen Betriebs der Turbine (12) erzeugter überschüssiger elektrischer Leistung in die Lastbank (16).

9. Betriebsverfahren nach einem der vorangehenden Ansprüche, umfassend den Schritt des Umschaltens der von der Turbine (12) erzeugten elektrischen Last von der Lastbank (16) zu der elektrischen Verkabelung, sobald die elektrische Verkabelung elektrisch mit der Turbine (12) verbunden ist.

## Revendications

1. Procédé de fonctionnement d'un système de turbine hydroélectrique (10) comportant les étapes consistant à :
déployer une turbine hydroélectrique (12) sur un fond marin (B) dans les limites d'une masse d'eau à marée ;
installer un câblage électrique pour transférer de l'énergie électrique depuis la turbine (12) jusqu'à un emplacement distant ;
permettre à la turbine (12) de tourner et de générer de l'énergie électrique en réponse au flux de marée de l'eau passant par la turbine (12) ; et avant la connexion électrique du câblage à la turbine (12), absorber l'énergie électrique dans un banc de charge (16) connecté électriquement à la turbine (12), le banc de charge (16) étant monté sur le système de turbine hydroélectrique (10).

2. Procédé de fonctionnement selon la revendication 1, comportant les étapes consistant à :
mettre en oeuvre le banc de charge (16) sous la forme d'un banc de charge à résistance et/ou un banc de charge à induction.

3. Procédé de fonctionnement selon la revendication 1 ou la revendication 2, comportant les étapes consistant à :
mettre en oeuvre le banc de charge (16) sous la forme d'un ou de plusieurs éléments chauffants ;
faire passer l'énergie électrique au travers des éléments chauffants afin de générer de la chaleur ; et
faire dissiper la chaleur dans l'eau s'écoulant devant le système de turbine (10).

4. Procédé de fonctionnement selon l'une quelconque des revendications précédentes, comportant les étapes consistant à :
connecter une sortie électrique de la turbine (12) à un réseau électrique (G) ; et
déconnecter électriquement le banc de charge (16) de la turbine (12).

5. Procédé de fonctionnement selon l'une quelconque des revendications 1 à 4, comportant l'étape consistant à :
surveiller un ou plusieurs paramètres de fonctionnement du système de turbine (10) alors que le banc de charge (16) est connecté électriquement à la turbine (12).

6. Procédé de fonctionnement selon l'une quelconque des revendications précédentes, comportant les étapes consistant à connecter électriquement le câblage à la turbine (12) et faire fonctionner la turbine (12) ; déconnecter électriquement le câblage de la turbine (12) pour permettre la maintenance/la dépose de la turbine (12) ; et avant la maintenance/la dépose de la turbine (12), absorber l'énergie électrique générée par la turbine (12) dans le banc de charge (16).

7. Procédé de fonctionnement selon l'une quelconque des revendications précédentes, comportant, au cours de l'étape consistant à déployer la turbine (12), l'étape consistant à suspendre la turbine (12) sous un navire (V) ; l'étape consistant à utiliser le navire (V) pour remorquer la turbine (12) dans l'eau de manière à effectuer la rotation de la turbine (12) pour générer de l'énergie électrique ; et l'étape consistant à absorber l'énergie électrique dans le banc de charge (16).

8. Procédé de fonctionnement selon l'une quelconque des revendications précédentes, comportant l'étape consistant à absorber tout excès d'énergie électrique, générée lors du fonctionnement normal de la turbine (12), dans le banc de charge (16).

9. Procédé de fonctionnement selon l'une quelconque des revendications précédentes, comportant l'étape consistant à commuter la charge électrique générée par la turbine (12) du banc de charge (16) au câblage électrique une fois que le câblage électrique est connecté électriquement à la turbine (12).
